# EUROPEAN PATENT APPLICATION

(11) **EP 4 729 369 A1**
(43) Date of publication of application: **22.04.2026**
(21) Application number: 24823249.8
(22) Date of filing: 31.05.2024
(51) Int. Cl.: B60R 21/264, B01J 7/00

(54) **GAS GENERATOR**

(30) Priority: 13.06.2023 JP 2023097095
(71) Applicant: Nippon Kayaku Kabushiki Kaisha, Tokyo 100-0005 (JP)
(72) Inventor: INOUE, Yuji, Himeji-shi, Hyogo 679-2123 (JP); SHIMIZU, Tomoya, Himeji-shi, Hyogo 679-2123 (JP)
(74) Representative: TBK
(86) International application number: PCT/JP2024/020038
(87) International publication number: WO 2024/257629

(57) **Abstract**

A gas generator (1A) includes a housing main body (10) made of metal, a holder assembly (20), and an igniter (40). The holder assembly (20) includes a first holder (20A) made of metal and a second holder (20B) made of resin, the first holder holding a base (41) of the igniter (40), an ignition portion (41) of the igniter (40) being accommodated in the second holder. The first holder (20A) is fixed to the housing main body (10) by being sandwiched between a first swaging portion (11) and a second swaging portion (12) provided in the housing main body (10). The first swaging portion (11) is covered and in pressure contact with a second barrel portion (23) of the second holder (20B). The second holder (20B) further includes a lid portion (26) that spaces a gas generating agent (60) apart from the ignition portion (42). The lid portion (26) is arranged at a distance from the ignition portion (42).

## Description

### TECHNICAL FIELD

The present invention relates to a gas generator incorporated in an air bag apparatus as a passenger protection apparatus equipped in a car and the like, and particularly to what is called a cylinder type gas generator having an elongated columnar outer geometry that is suitably incorporated into a side air bag apparatus and the like.

### BACKGROUND ART

From a point of view of protection of a driver and/or a passenger in a car, an air bag apparatus which is a passenger protection apparatus has conventionally widely been used. The air bag apparatus is equipped for the purpose of protecting a driver and/or a passenger against shock caused at the time of collision of a vehicle, and it receives a body of a driver or a passenger with the air bag serving as a cushion by instantaneously expanding and developing the air bag at the time of collision of a vehicle.

A gas generator is equipment which is incorporated in this air bag apparatus, an igniter therein being ignited in response to power feed caused by a control unit at the time of collision of a vehicle to thereby burn a gas generating agent with flame caused by the igniter and instantaneously generate a large amount of gas, and thus expands and develops an air bag.

Depending on a position of installation in a vehicle and the like or on specifications such as output, gas generators of various constructions are available. A gas generator called a cylinder type gas generator represents one example. The cylinder type gas generator has an outer geometry in an elongated columnar shape and it is suitably incorporated in a side air bag apparatus, a curtain air bag apparatus, a knee air bag apparatus, or a seat cushion air bag apparatus.

Normally, in a cylinder type gas generator, an igniter is assembled at one end in an axial direction of a housing, a combustion chamber where a gas generating agent is accommodated is provided on a side of the one end, a filter chamber where a filter is accommodated is provided on a side of the other end in the axial direction of the housing, and a gas discharge opening is provided in a circumferential wall portion of the housing in a portion defining the filter chamber.

In the cylinder type gas generator thus constructed, gas generated in the combustion chamber flows into the filter chamber along the axial direction of the housing and passes through the filter, and gas that has passed through the filter is discharged to the outside through the gas discharge opening.

The cylinder type gas generator is configured such that the igniter and the gas generating agent are arranged along the axial direction of the housing. Therefore, there is a concern that, in an example where the gas generating agent is arranged in contact with or in proximity to an ignition portion which is a portion of the igniter where the ignition agent is loaded, in cleavage of the ignition portion at the time of activation, the gas generating agent arranged in contact with or in proximity to the ignition portion may interfere with cleavage of the ignition portion. If interference with cleavage of the ignition portion occurs, propagation of thermal particles (that is, flame) produced in the igniter to the gas generating agent may be delayed or a direction of travel of thermal particles may be skewed. Therefore, there is a problem of variation in time from a time point of activation of the igniter until a time point of start of discharge of gas through the gas discharge opening to the outside or a combustion characteristic itself of the gas generating agent.

In order to avoid occurrence of such a problem, a cylinder type gas generator disclosed, for example, in Japanese Patent Laying-Open No. 2021-195020 (PTL 1) or Japanese Patent Laying-Open No. 2022-144932 (PTL 2) is configured such that a coil spring for elastically biasing the gas generating agent is arranged at an end of a combustion chamber where the igniter is provided and a length of the coil spring is adjusted for projection of a part of the coil spring toward the gas generating agent relative to the ignition portion to secure a distance between the gas generating agent and the igniter.

In the cylinder type gas generator, it is important to efficiently guide thermal particles produced in the igniter at the time of activation to the gas generating agent. A directivity providing member as a guide that gives directivity to the direction of travel of thermal particles produced in the ignition portion may be provided around the igniter. The directivity providing member is normally in a cylindrical shape that surrounds the ignition portion and provided inside the housing so as to bury a gap between the circumferential wall portion of the housing and the ignition portion.

Exemplary documents that disclose a specific configuration of the cylinder type gas generator equipped with such a directivity providing member include, for example, Japanese Patent Laying-Open No. 2017-1588 (PTL 3), Japanese Patent Laying-Open No. 2017-81343 (PTL 4), and the like.

### CITATION LIST

### PATENT LITERATURE

PTL 1: Japanese Patent Laying-Open No. 2021-195020
PTL 2: Japanese Patent Laying-Open No. 2022-144932
PTL 3: Japanese Patent Laying-Open No. 2017-1588
PTL 4: Japanese Patent Laying-Open No. 2017-81343

### SUMMARY OF INVENTION

### TECHNICAL PROBLEM

When the configurations disclosed in PTLs 1 and 2 are adopted, however, a difference in degree of compressive deformation of the coil spring due to dimension variation or the like of various components at the time of assembly is likely and an individual difference in distance between the igniter and the gas generating agent is inevitable, although the individual difference is minor. Therefore, for more precise control of the distance between the igniter and the gas generating agent, another assembly structure different from an assembly structure utilizing such a coil spring should be adopted.

In considering another assembly structure above, when the cylinder type gas generator is assumed to further include the directivity providing member described above, the directivity providing member is arranged in proximity to the igniter and the gas generating agent. Accordingly, the directivity providing member should also immovably be fixed inside the housing in a stable manner, which should essentially be considered together. Furthermore, in considering another assembly structure above, from a point of view of reduction in manufacturing cost, naturally and preferably, the assembly structure is not complicated.

Therefore, the present invention was made in view of problems described above, and an object thereof is to provide a gas generator with which desired gas output can be obtained in a stable manner while increase in manufacturing cost is suppressed.

### SOLUTION TO PROBLEM

A gas generator based on the present invention includes a housing main body, a holder assembly, and an igniter. The housing is formed from a cylindrical member made of metal, the member containing a combustion chamber where a gas generating agent is accommodated. The holder assembly is inserted in an opening end in an axial direction of the housing main body, and includes a hollow portion extending along a direction in parallel to the axial direction of the housing main body. The igniter includes an ignition portion where an ignition agent is loaded, a terminal pin connected to the ignition portion, and a base where the terminal pin is inserted, the base supporting both of the ignition portion and the terminal pin. At least a part of the igniter is arranged inside the hollow portion while the ignition portion is located on a side of the combustion chamber and the terminal pin is located opposite to the side of the combustion chamber. The holder assembly includes a first holder made of metal, the first holder holding the igniter by receiving the base, and a second holder made of resin, the second holder being located on the side of the combustion chamber when viewed from the first holder, the ignition portion being accommodated in the second holder. The first holder includes a first barrel portion in a cylindrical shape that defines the hollow portion and an annular projection that projects from the first barrel portion along a radial direction of the housing main body. The second holder includes a second barrel portion in a cylindrical shape that defines the hollow portion. The housing main body includes a first swaging portion decreased in diameter radially inward and a second swaging portion decreased in diameter radially inward, the second swaging portion being located on a side of the opening end when viewed from the first swaging portion. The first holder is fixed to the housing main body as the annular projection is sandwiched between the first swaging portion and the second swaging portion in the axial direction of the housing main body. The first swaging portion is covered with the second barrel portion and in pressure contact with at least a part of an outer circumferential surface of the second barrel portion. The second holder further includes a lid portion that spaces the gas generating agent apart from the ignition portion by closing at least a part of the hollow portion located opposite to the base portion when viewed from the ignition portion. The lid portion is arranged at a distance from the ignition portion along the axial direction of the housing main body.

### ADVANTAGEOUS EFFECTS OF INVENTION

According to the present invention, a gas generator with which desired gas output can be obtained in a stable manner while increase in manufacturing cost is suppressed can be provided.

### BRIEF DESCRIPTION OF DRAWINGS

Fig. 1 is a schematic diagram of a cylinder type gas generator according to a first embodiment.
Fig. 2 is an enlarged cross-sectional view of a vicinity of an igniter of the cylinder type gas generator shown in Fig. 1.
Fig. 3 is an enlarged cross-sectional view of the vicinity of a partition member of the cylinder type gas generator shown in Fig. 1.
Fig. 4 is a perspective view of a second holder shown in Fig. 1.
Fig. 5 is a plan view, a bottom view, and a cross-sectional view of the second holder shown in Fig. 1.
Fig. 6 is a schematic cross-sectional view showing a procedure of assembling a holder assembly and a procedure of assembling the holder assembly to a housing main body in the cylinder type gas generator shown in Fig. 1.
Fig. 7 is a cross-sectional view of the cylinder type gas generator shown in Fig. 1.
Fig. 8 is an enlarged cross-sectional view of a main part of the cylinder type gas generator shown in Fig. 1.
Fig. 9 is an enlarged cross-sectional view of a vicinity of an igniter of a cylinder type gas generator according to a second embodiment.

### DESCRIPTION OF EMBODIMENTS

An embodiment of the present invention will be described hereinafter in detail with reference to the drawings. An embodiment shown below represents application of the present invention to a cylinder type gas generator incorporated in a side air bag apparatus. The same or common elements in an embodiment shown below have the same reference characters allotted in the drawings and description thereof will not be repeated.

### (First Embodiment)

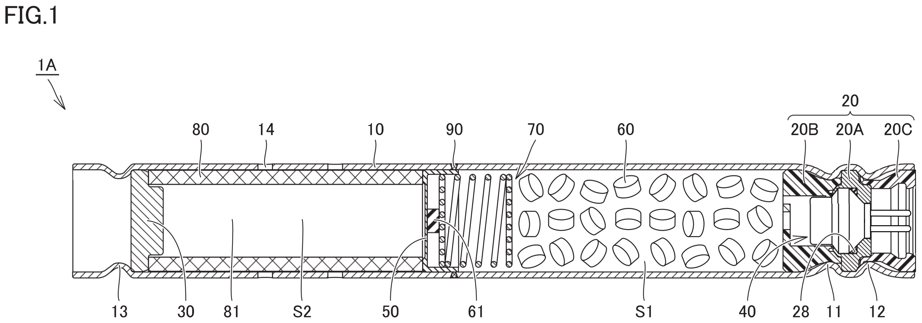

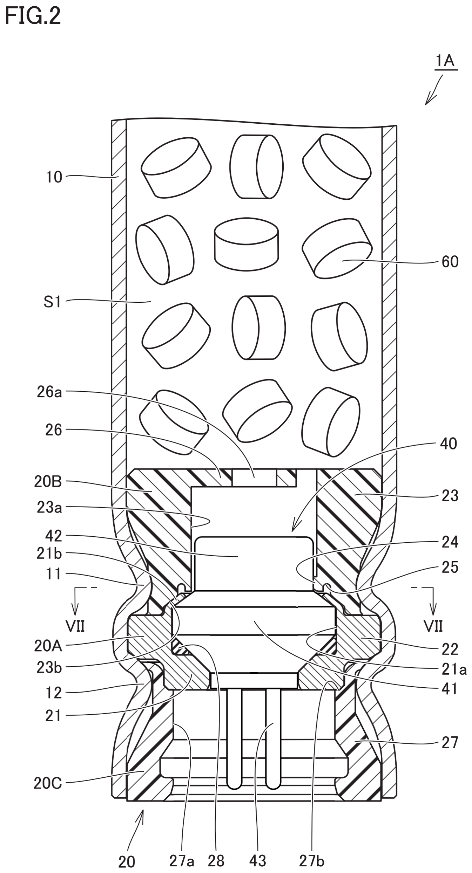

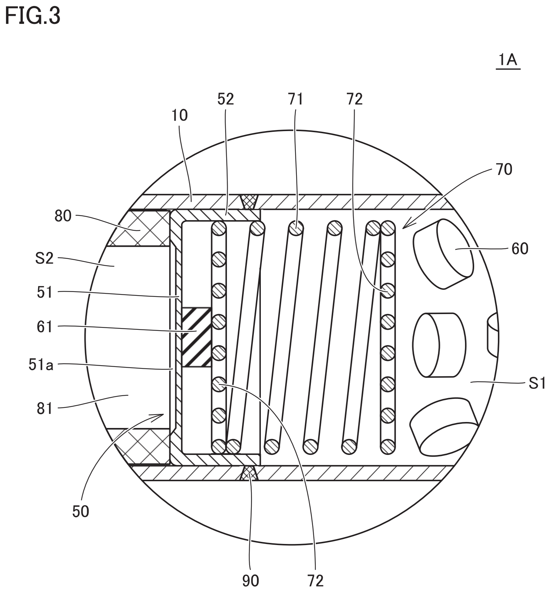

Fig. 1 is a schematic diagram of a cylinder type gas generator according to an embodiment. Figs. 2 and 3 are an enlarged cross-sectional view of the vicinity of an igniter and an enlarged cross-sectional view of the vicinity of a partition member, of the cylinder type gas generator shown in Fig. 1, respectively. A construction of a cylinder type gas generator 1A according to the present embodiment will initially be described with reference to Figs. 1 to 3.

As shown in Figs. 1 to 3, cylinder type gas generator 1A has an elongated columnar outer geometry and has an elongated substantially circular cylindrical housing having closed one and the other ends located in an axial direction. The housing includes a housing main body 10, a holder assembly 20, a closing member 30, and a partition member 50, and housing main body 10, holder assembly 20, and closing member 30 among them define an outer shell of the housing.

Inside housing main body 10, holder assembly 20, and closing member 30 that define the outer shell of the housing, an igniter 40, a gas generating agent 60, an autoignition agent 61, a coil spring 70, a filter 80, and the like as internal components are accommodated, and additionally thereto, above-described partition member 50 which is also an internal component is arranged. In the housing, a combustion chamber S1 where gas generating agent 60, autoignition agent 61, and coil spring 70 among the internal components described above are accommodated and a filter chamber S2 where filter 80 is accommodated are located.

Holder assembly 20 includes a first holder 20A made of metal, a second holder 20B made of resin, and a third holder 20C made of resin. First holder 20A is mainly a member that holds igniter 40, second holder 20B mainly functions as a directivity providing member, and third holder 20C is mainly a member that implements a female connector. Details of holder assembly 20 will be described later.

Housing main body 10 is made of an elongated circular cylindrical member which implements a circumferential wall portion of the housing and has an opening provided at each of opposing ends in the axial direction. Holder assembly 20 includes first holder 20A, second holder 20B, and third holder 20C as described above, and when it is generally viewed, it is formed from a substantially cylindrical member including a hollow portion which extends in a direction in parallel to the axial direction of housing main body 10. Closing member 30 is formed from a member substantially in a disc shape.

Housing main body 10 may be formed from a member made of metal such as stainless steel, iron steel, an aluminum alloy, or a stainless alloy or from a circularly cylindrically formed press-formed product by press-working of a rolled steel plate represented by SPCE. Alternatively, housing main body 10 may be formed from an electric resistance welded tube represented by STKM.

In particular, when housing main body 10 is formed from a press-formed product of a rolled steel plate or an electric resistance welded tube, housing main body 10 can be formed more inexpensively and readily and with much lighter weight than when the housing main body is formed from a member made of metal such as stainless steel or iron steel.

First holder 20A of holder assembly 20 and closing member 30, on the other hand, are formed from a member made of metal such as stainless steel, iron steel, an aluminum alloy, or a stainless alloy.

Holder assembly 20 is fixed to housing main body 10 so as to close one axial opening end of housing main body 10. Specifically, while holder assembly 20 is inserted in one opening end of housing main body 10, a prescribed position of housing main body 10 is decreased in diameter radially inward toward holder assembly 20 and another prescribed position of housing main body 10 is decreased in diameter radially inward toward holder assembly 20, so that holder assembly 20 is fixed by swaging to housing main body 10. Thus, one axial end of the housing is implemented by holder assembly 20.

Closing member 30 is fixed to housing main body 10 so as to close the other axial opening end of housing main body 10. Specifically, while closing member 30 is located in the other opening end of housing main body 10 so that one axial end surface thereof abuts on filter 80, a prescribed position of housing main body 10 is decreased in diameter radially inward toward the vicinity of the other axial end surface of closing member 30, so that closing member 30 is fixed by swaging to housing main body 10. The other axial end of the housing is thus implemented by closing member 30.

Such fixing by swaging is called omnidirectional swaging in which housing main body 10 is substantially uniformly decreased in diameter radially inward. With such omnidirectional swaging, a first swaging portion 11 and a second swaging portion 12 for fixing holder assembly 20 and a third swaging portion 13 for fixing closing member 30 are provided in housing main body 10. Housing main body 10 is thus in direct contact with holder assembly 20 and closing member 30, so that a gap is prevented from being provided therebetween. Fixation of holder assembly 20 to housing main body 10 will be described later in further detail.

A structure for assembly of closing member 30 to housing main body 10 is not limited to the assembly structure described above, and another assembly structure may be adopted. Alternatively, housing main body 10 and closing member 30 do not have to be separate members, and they may be implemented as one member in a shape of a cylinder with bottom.

As shown in Figs. 1 and 2, igniter 40 is assembled to the above-described one axial end of the housing by being supported by holder assembly 20. Igniter 40 serves to burn gas generating agent 60 and is set to face a space in the housing.

Igniter 40 serves to initiate flame and it is also referred to as a squib. Igniter 40 includes a base 41, an ignition portion 42, and a pair of terminal pins 43. Base 41 is a part that holds ignition portion 42 and the pair of terminal pins 43 and at least one of the pair of terminal pins 43 is inserted in base 41. The pair of terminal pins 43 serves to electrically connect cylinder type gas generator 1A to a control unit (not shown) of a vehicle or the like provided outside.

Ignition portion 42 contains an ignition agent that initiates flame by being ignited and burnt at the time of activation and a resistor (bridge wire) for ignition of the ignition agent. The pair of terminal pins 43 is connected to ignition portion 42 for ignition of the ignition agent.

More specifically, ignition portion 42 includes a squib cup formed like a cup. The resistor described above is attached to couple to each other, tip ends of the pair of terminal pins 43 inserted in the squib cup, and the ignition agent is loaded in the squib cup so as to surround the resistor or to be in proximity to the resistor. An enhancer agent may be loaded in ignition portion 42 as necessary.

Here, a Nichrome wire or a resistance wire made of an alloy containing platinum and tungsten is generally used as a resistor, and ZPP (zirconium potassium perchlorate), ZWPP (zirconium tungsten potassium perchlorate), lead tricinate, or the like is generally made use of as the ignition agent. A composition composed of metal powders/oxidizing agent represented by B/KNO₃, B/NaNO₃, or Sr(NO₃)₂, a composition composed of titanium hydride/potassium perchlorate, or a composition composed of B/5-aminotetrazole/potassium nitrate/molybdenum trioxide is employed as the enhancer agent.

Upon sensing collision, a prescribed amount of current flows in a resistor through terminal pin 43. As the prescribed amount of current flows in the resistor, Joule heat is generated in the resistor and the ignition agent starts burning. Thermal particles at a high temperature caused by burning cleave the squib cup where the ignition agent is accommodated. A time period from flow of a current in the resistor until activation of igniter 40 is generally not longer than 2 milliseconds in a case that the Nichrome wire is employed as the resistor.

Ignition portion 42 of igniter 40 is located as projecting toward combustion chamber S1 relative to base 41 and igniter 40 is fixed to holder assembly 20 while a part thereof is arranged inside the above-described hollow portion of holder assembly 20. Ignition portion 42 of igniter 40 is thus located on a side of combustion chamber S1 and terminal pin 43 thereof is located opposite to the side of combustion chamber S1.

A sealing member 28 formed from an O ring or the like is interposed at a prescribed position between holder assembly 20 and igniter 40. Sealing member 28 thus buries and seals a gap between holder assembly 20 and igniter 40. According to such a configuration, airtightness at that portion can be secured, which will be described in detail later.

As shown in Figs. 1 and 3, partition member 50 that forms a part of the housing as described above is arranged at a prescribed position in the space in the housing. Partition member 50 is a member for partitioning the space in the housing into combustion chamber S1 and filter chamber S2 in the axial direction.

Partition member 50 is in a shape of a circular cylinder with bottom, and formed from a member made of metal such as stainless steel, iron steel, an aluminum alloy, or a stainless alloy. Partition member 50 includes a separation wall portion 51 in a form of a flat plate arranged to be orthogonal to the axial direction of housing main body 10 and an annular wall portion 52 in a form of a cylindrical wall erected from a circumferential edge of separation wall portion 51 toward combustion chamber S1. Partition member 50 is arranged such that a main surface on an outer side of separation wall portion 51 abuts on filter 80 and an outer circumferential surface of annular wall portion 52 abuts on an inner circumferential surface of housing main body 10.

A score 51a is provided in a main surface of separation wall portion 51 which abuts on filter 80. Score 51a serves to provide an opening as a result of rupture of separation wall portion 51 with increase in internal pressure in combustion chamber S1 as a result of burning of gas generating agent 60, and it is provided, for example, as a plurality of grooves provided to radially intersect with one another. Score 51a is provided in a portion in filter 80 opposed to a cavity portion 81.

Partition member 50 is assembled by being joined to housing main body 10 while it is located in housing main body 10. More specifically, partition member 50 is fixed to housing main body 10 by being press-fitted into housing main body 10 and being joined by welding or the like at a portion of contact between annular wall portion 52 of partition member 50 and housing main body 10 or in the vicinity thereof.

Thus, in a portion of the housing where partition member 50 is located, a welded portion 90 that extends along the circumferential direction of the housing is provided, and this welded portion 90 buries a gap between housing main body 10 and partition member 50. Therefore, the gap is sealed with welded portion 90, and airtightness at that portion can be secured. Electron beam welding, laser welding, resistance welding, and the like can suitably be used for welding between housing main body 10 and partition member 50.

A structure for assembling partition member 50 to housing main body 10 is not limited to the assembly structure using press-fitting and welding described above, and another assembly structure may be adopted. Airtightness between housing main body 10 and partition member 50 in that case can be ensured by providing an O ring or the like at an appropriate position.

As shown in Figs. 1 to 3, in a space inside the housing, gas generating agent 60, autoignition agent 61, and coil spring 70 are arranged in a space lying between holder assembly 20 and partition member 50 (that is, combustion chamber S1).

Among these, coil spring 70 is arranged on a side in combustion chamber S1 where partition member 50 is located and gas generating agent 60 is arranged between holder assembly 20 and coil spring 70. Autoignition agent 61 is arranged between partition member 50 and coil spring 70 to abut on partition member 50.

Gas generating agent 60 is an agent which is ignited by thermal particles produced as a result of activation of igniter 40 and produces gas as it burns. A non-azide-based gas generating agent is preferably employed as gas generating agent 60, and gas generating agent 60 is formed as a molding generally containing a fuel, an oxidizing agent, and an additive.

For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of.

As the oxidizing agent, for example, basic metal salt such as basic copper nitrate and basic copper carbonate, perchlorate such as ammonium perchlorate or potassium perchlorate, nitrate containing cations selected from an alkali metal, an alkali earth metal, a transition metal, and ammonia, or the like is made use of. As the nitrate, for example, sodium nitrate, potassium nitrate, or the like is suitably made use of.

As the additive, a binder, a slag formation agent, a combustion modifier, or the like is exemplified. As the binder, for example, an organic binder such as metal salt of carboxymethyl cellulose and stearate, or an inorganic binder such as synthetic hydrotalcite and Japanese acid clay can suitably be made use of. As the slag formation agent, silicon nitride, silica, Japanese acid clay, or the like can suitably be made use of. As the combustion modifier, a metal oxide, ferrosilicon, activated carbon, graphite, or the like can suitably be made use of.

A shape of a molding of gas generating agent 60 includes various shapes such as a particulate shape including a granule, a pellet, and a column, and a disc shape. Among columnar moldings, a molding with holes having through holes in the molding (such as a cylindrical shape with a single hole or a cylindrical shape with multiple holes) is also made use of. These shapes are preferably selected as appropriate depending on specifications of an air bag apparatus in which cylinder type gas generator 1A is incorporated, and for example, a shape optimal for the specifications is preferably selected by selecting a shape allowing change over time of a rate of generation of gas during burning of gas generating agent 60. Furthermore, in addition to a shape of gas generating agent 60, a size of a molding or an amount thereof for filling is preferably selected as appropriate, in consideration of a linear burning velocity, a pressure exponent, or the like of gas generating agent 60.

Coil spring 70 is provided for the purpose of prevention of gas generating agent 60 formed from a molding from being crushed by vibration or the like, and includes a spring portion 71 formed by bending a metal wire rod and a pair of pressing portions 72 located at opposing ends thereof.

Spring portion 71 is formed from a substantially cylindrical part obtained by helical winding of a metal wire rod. One of the pair of pressing portions 72, on the other hand, is provided at one end of spring portion 71 and the other thereof is provided at the other end of spring portion 71. The pair of pressing portions 72 is constructed to substantially be in a disc shape as a whole, for example, by arranging a metal wire rod substantially in parallel or spirally at prescribed intervals. One of the pair of pressing portions 72 is in contact with gas generating agent 60 and the other thereof is in contact with autoignition agent 61.

Coil spring 70 is compressed by being sandwiched between autoignition agent 61 and gas generating agent 60. Thus, gas generating agent 60 is elastically biased toward holder assembly 20 by coil spring 70 and thus prevented from moving inside combustion chamber S1. Therefore, according to such a construction, gas generating agent 60 made of a molding can be prevented from being crushed by vibration or the like.

In assembly of coil spring 70, coil spring 70 is sandwiched between autoignition agent 61 and gas generating agent 60 and compressed, so as to also accommodate variation in dimension among various components accommodated in the housing.

Autoignition agent 61 is composed of a pellet formed into a substantially columnar shape with a flat profile. Autoignition agent 61 is arranged opposite (that is, on a side of filter 80) to a side where gas generating agent 60 is located when viewed from coil spring 70, and held by being sandwiched between separation wall portion 51 of partition member 50 and coil spring 70. Autoignition agent 61 is thus separated from gas generating agent 60 by coil spring 70.

Autoignition agent 61 is an agent that self-ignites independently of activation of igniter 40. More specifically, autoignition agent 61 self-ignites at a temperature lower than a temperature of self-ignition of gas generating agent 60, and it serves not to induce an abnormal operation due to external heating of cylinder type gas generator 1A in case of fire or the like in a vehicle or the like equipped with an air bag apparatus incorporating cylinder type gas generator 1A.

As shown in Figs. 1 and 3, in the space in the housing, filter 80 is arranged in the space (that is, filter chamber S2) lying between closing member 30 and partition member 50. Filter 80 is formed from a circular cylindrical member provided with cavity portion 81 extending in a direction in parallel to the axial direction of housing main body 10, and has one axial end surface abutting on closing member 30 and has the other axial end surface abutting on separation wall portion 51 of partition member 50.

Filter 80 functions as cooling means for cooling gas by removing heat from the gas at a high temperature when gas produced as a result of burning of gas generating agent 60 passes through this filter 80 and also functions as removal means for removing slag (residues) or the like contained in gas. As described above, by making use of filter 80 formed from a circular cylindrical member, a flow resistance against gas which flows through filter chamber S2 at the time of activation is suppressed and an efficient flow of gas can be achieved.

A filter formed from an aggregate of metal wire rods or metal mesh materials suitably made of stainless steel or iron steel can be made use of as filter 80. Specifically, a wire gauze of stocking stitch, a plain-woven wire gauze, an aggregate of crimped metal wire rods, or a material obtained by compressing the former with the use of a press can be made use of.

Alternatively, a material obtained by winding a perforated metal plate can also be made use of as filter 80. In this case, as the perforated metal plate, for example, expanded metal obtained by making staggered cuts in a metal plate and providing holes by widening the cuts to thereby work the metal plate in a mesh, hook metal obtained by perforating a metal plate and collapsing burrs caused around a periphery of the hole for flattening, or the like can be made use of.

A plurality of gas discharge openings 14 are provided along the circumferential direction and the axial direction in housing main body 10 in a portion defining filter chamber S2. The plurality of gas discharge openings 14 serve for guiding gas which has passed through filter 80 to the outside of the housing.

An operation of cylinder type gas generator 1A according to the present embodiment when it is activated will now be described with reference to Fig. 1.

With reference to Fig. 1, when a vehicle on which cylinder type gas generator 1A according to the present embodiment is mounted collides, collision is sensed by collision sensing means separately provided in the vehicle and igniter 40 is activated based thereon by current feed caused by a control unit separately provided in the vehicle.

When igniter 40 is activated, the ignition agent or the enhancer agent in addition thereto burns. Then, a pressure in ignition portion 42 increases, which cleaves the squib cup of ignition portion 42, and thermal particles resulting from burning of the ignition agent or the enhancer agent in addition thereto flow to the outside of ignition portion 42. Thermal particles which have reached gas generating agent 60 burn gas generating agent 60 so that a large amount of gas is produced in combustion chamber S1.

Accordingly, a pressure in combustion chamber S1 increases and an internal pressure in combustion chamber S1 reaches a prescribed pressure, which causes a rupture in a portion of partition member 50 where score 51a is provided. An opening is thus provided in a portion of partition member 50 opposed to cavity portion 81 of filter 80, and combustion chamber S1 and filter chamber S2 communicate with each other through the opening.

Accordingly, gas produced in combustion chamber S1 flows into filter chamber S2 through the opening provided in partition member 50. Gas which has flowed into filter chamber S2 flows along the axial direction through cavity portion 81 of filter 80, thereafter changes its direction toward a radial direction, and passes through filter 80. At that time, heat is removed through filter 80 and gas is cooled, and slag contained in gas is removed by filter 80.

Gas which has passed through filter 80 is discharged to the outside of the housing through gas discharge opening 14 provided in housing main body 10 . Discharged gas is introduced into an air bag provided adjacently to cylinder type gas generator 1A to thereby expand and develop the air bag. Autoignition agent 61 burns together with gas generating agent 60 when the gas generating agent burns.

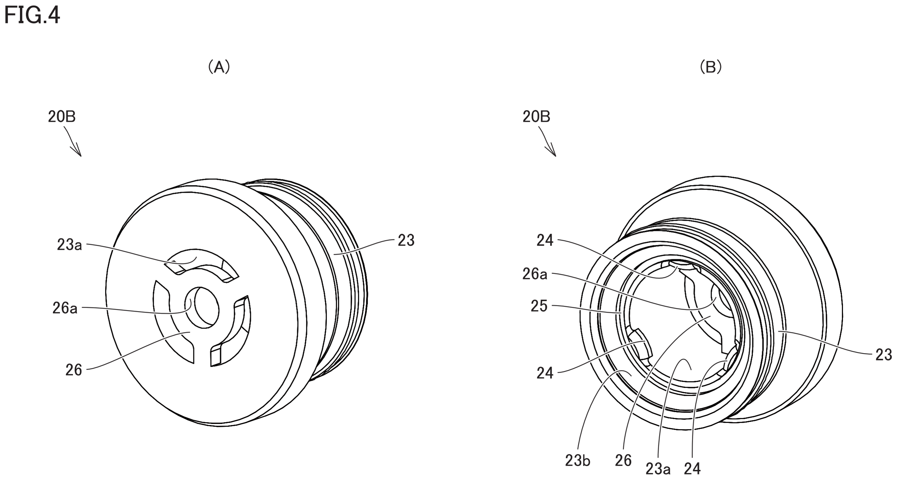

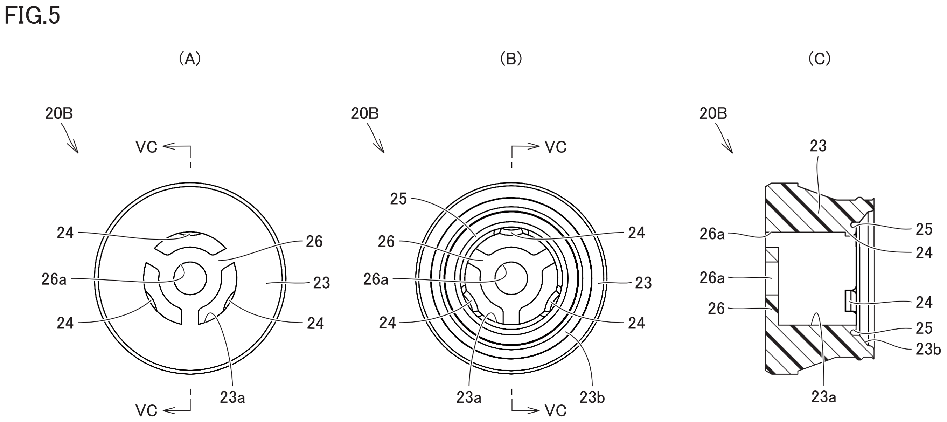

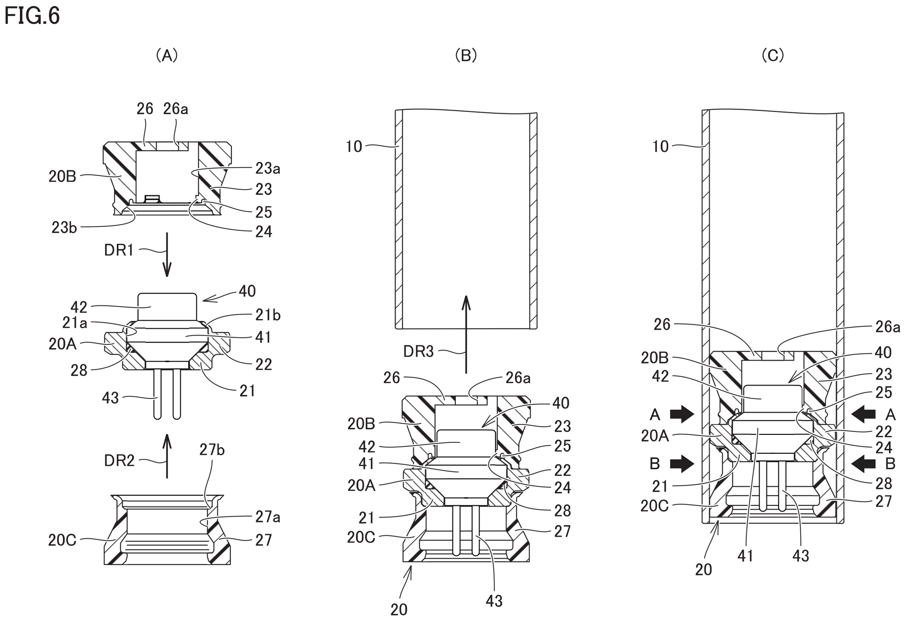

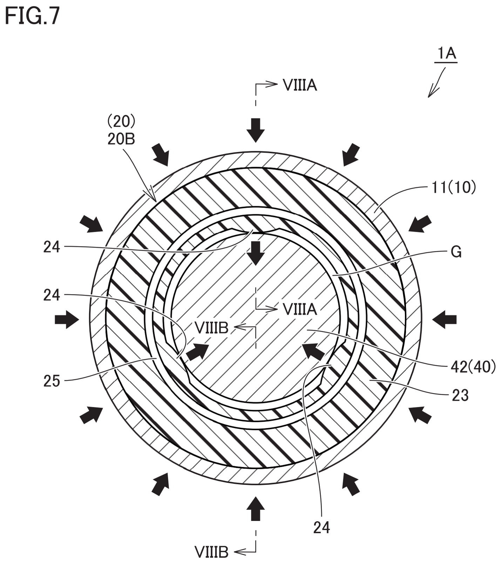

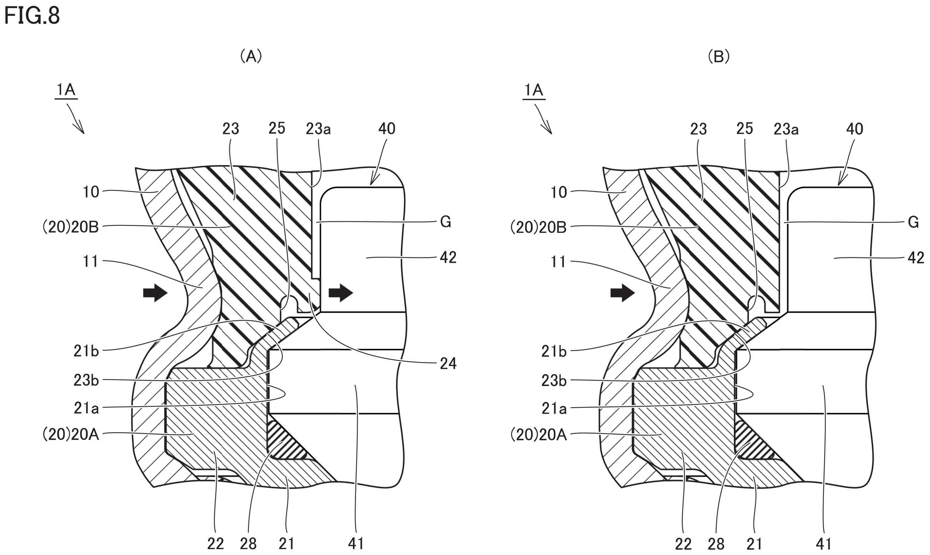

Fig. 4 (A) and Fig. 4 (B) are each a perspective view of the second holder of the holder assembly provided in the cylinder type gas generator according to the present embodiment. Fig. 5 (A) and Fig. 5 (B) are a plan view and a bottom view of the second holder, respectively, and Fig. 5 (C) is a cross-sectional view along the line VC-VC shown in Fig. 5 (A) and Fig. 5 (B). Fig. 6 (A) to Fig. 6 (C) are schematic cross-sectional views showing stepwise, a procedure of assembling the holder assembly and a procedure of assembling the holder assembly to the housing main body in the cylinder type gas generator according to the present embodiment. Fig. 7 is a cross-sectional view along the line VII-VII shown in Fig. 2 and Fig. 8 (A) and Fig. 8 (B) are enlarged cross-sectional views of a main part along the line VIIIA-VIIIA and the line VIIIB-VIIIB shown in Fig. 7, respectively. A detailed structure of the vicinity of igniter 40 in cylinder type gas generator 1A according to the present embodiment will now be described with reference to Figs. 4 (A) to 8 (B) and Fig. 2 described previously.

Referring to Fig. 2, in cylinder type gas generator 1A according to the present embodiment, as described above, holder assembly 20 assembled to housing main body 10 to close the above-described one axial end of the housing supports igniter 40 to assemble igniter 40 to the one axial end of the housing. Holder assembly 20 includes first holder 20A made of metal, second holder 20B made of resin, and third holder 20C made of resin, and holder assembly 20 is fixed to housing main body 10 by first swaging portion 11 and second swaging portion 12 provided at prescribed positions in housing main body 10.

As shown in Fig. 2, first holder 20A is formed from a member substantially in a shape of a disc with a flat profile, the member including in its central portion, a through portion that extends along the axial direction, and first holder 20A includes a first barrel portion 21 in a cylindrical shape and an annular projection 22 that projects outward from an outer circumferential surface of first barrel portion 21.

First holder 20A is inserted in housing main body 10 such that the axial direction thereof is in parallel to the axial direction of housing main body 10. The through portion provided in first holder 20A thus defines a part of the above-described hollow portion of holder assembly 20. Annular projection 22 projects outward from first barrel portion 21 along the radial direction of housing main body 10. Annular projection 22 described above is provided at an end of first barrel portion 21 on the side of combustion chamber S1.

First holder 20A is a member that receives and holds igniter 40. First holder 20A is provided with a first accommodation portion 21a in a recessed shape at an axial end on the side of combustion chamber S1 for receiving igniter 40. This first accommodation portion 21a communicates with the through portion provided in first holder 20A and defines a part of the above-described hollow portion of holder assembly 20. A swaging portion 21b is provided at an end of first holder 20A on the side of combustion chamber S1 to surround first accommodation portion 21a. Swaging portion 21b is a part for fixing by swaging igniter 40 to first holder 20A.

Igniter 40 is fixed to first holder 20A with base 41 thereof being accommodated in first accommodation portion 21a of first holder 20A. Specifically, igniter 40 is fixed to first holder 20A in such a manner that base 41 is inserted in first accommodation portion 21a of first holder 20A, base 41 abuts on a bottom surface of first accommodation portion 21a, and swaging portion 21b provided in first holder 20A is bent in this state. Igniter 40 is thus held by first holder 20A.

Above-described sealing member 28 formed from the O ring or the like is interposed between first holder 20A and igniter 40. Specifically, sealing member 28 is arranged on an outer edge of the bottom surface of first accommodation portion 21a of first holder 20A. Sealing member 28 is thus sandwiched between first holder 20A and igniter 40 to be compressed by pressing force generated by swaging of swaging portion 21b described above, to seal the gap produced between holder assembly 20 and igniter 40.

As shown in Fig. 2 and Figs. 4 (A) to 5 (C), second holder 20B is formed from a substantially circular cylindrical member, the member including in its central portion, second accommodation portion 23a substantially in a shape of a through hole that extends along the axial direction, and includes a second barrel portion 23 in a cylindrical shape and a lid portion 26 provided to cover one axial end of second accommodation portion 23a.

Second holder 20B is arranged on the side of combustion chamber S1 when viewed from first holder 20A and arranged adjacently to first holder 20A. Second holder 20B is inserted in housing main body 10 such that the axial direction thereof is in parallel to the axial direction of housing main body 10. Second accommodation portion 23a provided in second holder 20B thus defines a part of the above-described hollow portion of holder assembly 20.

Ignition portion 42 of igniter 40 is accommodated in second accommodation portion 23a provided in second holder 20B. In other words, second holder 20B is located to surround ignition portion 42 of igniter 40 held by first holder 20A, so that a portion close to first holder 20A, of second barrel portion 23 of second holder 20B is located to surround a circumferential surface of ignition portion 42.

Lid portion 26 described above is provided at an axial end of second barrel portion 23 opposite to first holder 20A so as to be located at a prescribed distance from ignition portion 42. Second barrel portion 23 extends to be located as projecting further toward combustion chamber S1 relative to ignition portion 42 along the axial direction of housing main body 10. As lid portion 26 is provided at the axial end on a tip end side of the second barrel portion, lid portion 26 is located at the prescribed distance from ignition portion 42.

Lid portion 26 is provided with a plurality of openings 26a. Lid portion 26 is configured such that a maximum outer geometrical dimension of each of the plurality of openings 26a when viewed along the axial direction of housing main body 10 is smaller than a minimum outer geometrical dimension of gas generating agent 60. More specifically, in the present embodiment, one circular opening 26a is provided at a central portion of lid portion 26 and three openings 26a in a shape of a curved elongated hole are provided to surround single opening 26a. The maximum outer geometrical dimension of each of openings 26a is thus smaller than the minimum outer geometrical dimension of gas generating agent 60.

Second accommodation portion 23a located opposite to base 41 when viewed from ignition portion 42 is thus substantially closed by lid portion 26 at the position at the prescribed distance from ignition portion 42 so that entry of gas generating agent 60 in second accommodation portion 23a is prevented and gas generating agent 60 is separated as being arranged at a distance from ignition portion 42.

As second holder 20B thus buries the gap between ignition portion 42 of igniter 40 and housing main body 10, it functions as the directivity providing member that gives directivity to the direction of travel of thermal particles produced in ignition portion 42 at the time of activation of cylinder type gas generator 1A, and particularly second barrel portion 23 of second holder 20B performs that function.

Second holder 20B functions also as a spacer for maintaining the distance between ignition portion 42 and gas generating agent 60 at a predetermined appropriate distance, and particularly lid portion 26 of second holder 20B performs that function.

An axial end of second holder 20B located on the side of first holder 20A is provided with a first annular stepped portion 23b formed by cutting a part of second barrel portion 23. This first annular stepped portion 23b is provided at an inner edge of the end of second barrel portion 23 on the side of first holder 20A. Swaging portion 21b of first holder 20A is fitted to first annular stepped portion 23b provided in this second holder 20B.

As shown in Fig. 2, third holder 20C is formed from a substantially circular cylindrical member, the member including in its central portion, a third accommodation portion 27a in a shape of a through hole that extends along the axial direction, and third holder 20C includes a third barrel portion 27 in a cylindrical shape.

Third holder 20C is arranged opposite to the side of combustion chamber S1 when viewed from first holder 20A and located adjacently to first holder 20A. Third holder 20C is inserted in housing main body 10 such that the axial direction thereof is in parallel to the axial direction of housing main body 10. Third accommodation portion 27a provided in third holder 20C thus defines a part of the above-described hollow portion of holder assembly 20.

The pair of terminal pins 43 of igniter 40 is accommodated in third accommodation portion 27a provided in third holder 20C. In other words, third holder 20C is located to surround the pair of terminal pins 43 of igniter 40 held by first holder 20A so that the pair of terminal pins 43 of igniter 40 is arranged inside third holder 20C. Third accommodation portion 27a defines a part for receiving a connector of a harness described above.

More specifically, as described above, in cylinder type gas generator 1A, igniter 40 should electrically be connected to a control unit of a vehicle or the like provided outside, and a harness is normally used for this electrical connection. A male connector is attached to a tip end of the harness, and third holder 20C should be provided with a female connector connectable to this male connector. Third accommodation portion 27a provided in third holder 20C implements this female connector.

As the male connector of the harness is inserted in third accommodation portion 27a that functions as the female connector, a core of the harness and terminal pin 43 electrically conduct to each other. Wired connection between igniter 40 and the control unit of the vehicle or the like is thus established.

An axial end of third holder 20C located on the side of first holder 20A is provided with a second annular stepped portion 27b formed by cutting a part of third barrel portion 27. This second annular stepped portion 27b is provided at an inner edge of the end of third barrel portion 27 on the side of first holder 20A. An axial end of first barrel portion 21 of first holder 20A opposite to the side of combustion chamber S1 is fitted to second annular stepped portion 27b provided in this third holder 20C.

Though a material for second holder 20B and third holder 20C described above is not particularly restricted, for example, a nylon-based resin as represented by nylon 6, nylon 66, and nylon 6 or nylon 66 filled with a glass filler, a polyacetal (POM) resin, a polycarbonate (PC) resin, a polyphenylene sulfide (PPS) resin, a polybutylene terephthalate (PBT) resin, or the like can suitably be employed. Second holder 20B and third holder 20C may be made of a material identical in type or materials different in type.

According to the configuration as above, in cylinder type gas generator 1A according to the present embodiment, as described above, second holder 20B can perform the function as the directivity providing member. Specifically, the gap between ignition portion 42 and housing main body 10 is substantially buried by second holder 20B so that a degree of cleavage of the squib cup is intentionally restricted at the time of activation of cylinder type gas generator 1A. Therefore, an opening is mainly provided at a tip end of the squib cup located on the side of gas generating agent 60, and accordingly, the direction of travel of thermal particles produced in ignition portion 42 is narrowed in the axial direction of housing main body 10. Therefore, thermal particles produced in ignition portion 42 can efficiently be guided to gas generating agent 60 and an amount of gas generating agent 60 to be loaded, that is necessary for obtaining desired gas output, can be reduced.

The gap between ignition portion 42 and housing main body 10 is substantially buried by second holder 20B so that, as compared with an example where that portion is not buried, a volume of combustion chamber S1 can be smaller and increase in internal pressure in combustion chamber S1 is promoted at the time of activation of cylinder type gas generator 1A. Therefore, since gas generating agent 60 can efficiently burn also in this regard, the amount of gas generating agent 60 to be loaded, that is necessary for obtaining desired gas output, can be reduced.

According to the configuration as above, in cylinder type gas generator 1A according to the present embodiment, as described above, lid portion 26 is provided in second holder 20B to have second holder 20B perform the function as the spacer for maintaining the distance between ignition portion 42 and gas generating agent 60 at the predetermined appropriate distance. Therefore, according to such a configuration, the individual difference in distance between igniter 40 and gas generating agent 60 is less likely and desired gas output can be obtained in a stable manner at the time of activation of cylinder type gas generator 1A.

As shown in Fig. 6 (A) to Fig. 6 (C), in assembly of igniter 40 to the one axial end of housing main body 10, initially, holder assembly 20 and igniter 40 are assembled to be a sub assembly. Thereafter, this sub assembly of holder assembly 20 and igniter 40 (which will be referred to as an igniter assembly below) is assembled to housing main body 10.

Specifically, as shown in Fig. 6 (A), first holder 20A made by assembly in advance of igniter 40 and sealing member 28 to each other is prepared, and second holder 20B and third holder 20C are assembled to first holder 20A to make the igniter assembly.

Second holder 20B is assembled to first holder 20A in a direction shown with an arrow DR1 in the figure such that ignition portion 42 is accommodated in second accommodation portion 23a. At this time, swaging portion 21b of first holder 20A is fitted to first annular stepped portion 23b provided in second holder 20B and ignition portion 42 is press-fitted into second barrel portion 23 of second holder 20B. Press-fitting of ignition portion 42 into this second barrel portion 23 will be described in detail later. Second holder 20B is thus fixed to first holder 20A.

Third holder 20C is assembled to first holder 20A in a direction shown with an arrow DR2 in the figure such that the pair of terminal pins 43 is accommodated in third accommodation portion 27a. At this time, the axial end of first holder 20A is press-fitted, by fitting, into second annular stepped portion 27b provided in third holder 20C. Third holder 20C is thus fixed to first holder 20A.

Then, as shown in Fig. 6 (B), the igniter assembly made by assembly of first holder 20A, second holder 20B, third holder 20C, igniter 40, and sealing member 28 is press-fitted by insertion in the above-described one axial end of housing main body 10 in a direction shown with an arrow DR3 in the figure. The outer circumferential surface corresponding to a maximum outer diameter portion of each of first holder 20A, second holder 20B, and third holder 20C is in pressure contact with the inner circumferential surface of housing main body 10, so that the igniter assembly inserted in housing main body 10 is arranged as being positioned at a prescribed position inside housing main body10 and the igniter assembly is held by housing main body 10 at the prescribed position.

Then, as shown in Fig. 6 (C), housing main body 10 is decreased in diameter radially inward at the prescribed position so that the igniter assembly is fixed by swaging to housing main body 10.

Specifically, housing main body 10 is decreased in diameter in a direction shown with an arrow A in the figure at a position corresponding to a portion of second holder 20B adjacent to first holder 20A and decreased in diameter in a direction shown with an arrow B in the figure at a position corresponding to a portion of third holder 20C adjacent to first holder 20A. A diameter decreasing work at these two locations on housing main body 10 is swaging called omnidirectional swaging described above, and it is simultaneously done by using a dedicated swaging machine.

Thus, as shown in Fig. 2, housing main body 10 decreased in diameter at the two locations holds annular projection 22 of first holder 20A in the axial direction of housing main body 10. In other words, first swaging portion 11 and second swaging portion 12 which are the two locations of housing main body 10 decreased in diameter immovably sandwich annular projection 22 to thereby fix by swaging the igniter assembly including holder assembly 20 to housing main body 10.

At this time, as shown in Fig. 2, first swaging portion 11 is decreased in diameter such that an inner circumferential surface thereof is in pressure contact with an outer circumferential surface of second barrel portion 23 of second holder 20B and second swaging portion 12 is decreased in diameter such that an inner circumferential surface thereof is in pressure contact with an outer circumferential surface of third barrel portion 27 of third holder 20C. Thus, first swaging portion 11 and second holder 20B are in intimate contact with each other and second swaging portion 12 and third holder 20C are in intimate contact with each other. Production of a gap between housing main body 10 and holder assembly 20 is prevented and the gap is thus sealed. If performance of sealing simply by this fixing by swaging is insufficient, sealing performance may be secured by application or the like of a liquid sealant between housing main body 10 and holder assembly 20.

As described above, in assembly of second holder 20B to first holder 20A, not only swaging portion 21b of first holder 20A is fitted to first annular stepped portion 23b provided in second holder 20B but also ignition portion 42 is press-fitted into second barrel portion 23 of second holder 20B. This is because press-fitting of swaging portion 21b into first annular stepped portion 23b is difficult due to a shape or a size of swaging portion 21b. If second holder 20B is not sufficiently fixed to first holder 20A, position displacement of second holder 20B may occur in subsequent fixing by swaging of the igniter assembly to housing main body 10 described above.

In press-fitting of ignition portion 42 into second barrel portion 23, however, deformation of ignition portion 42 (that is, deformation of the squib cup) by press-fitting should be suppressed as much as possible. This is because great deformation of ignition portion 42 caused by press-fitting may affect combustion performance of the ignition agent more than slightly at the time of activation, which may lead to adverse influence on output characteristics of cylinder type gas generator 1A.

Additionally, in fixing by swaging of the igniter assembly to housing main body 10, with decrease in diameter of housing main body 10 for pressure contact of the inner circumferential surface of a portion of housing main body 10 where first swaging portion 11 is formed with the outer circumferential surface of second barrel portion 23 of second holder 20B, compressive force is applied locally also to second barrel portion 23 at that portion. Accordingly, compressive force is applied also to ignition portion 42 with second barrel portion 23 being interposed, and ignition portion 42 may greatly deform due to this compressive force. Therefore, deformation of ignition portion 42 should be suppressed as much as possible also in fixing by swaging of the igniter assembly to housing main body 10.

In this connection, in cylinder type gas generator 1A according to the present embodiment, while ignition portion 42 is press-fitted into second barrel portion 23, deformation of ignition portion 42 caused thereby can be suppressed to minimum and deformation of ignition portion 42 can be suppressed as much as possible also in fixing by swaging of the igniter assembly to housing main body 10, a mechanism of which will be described in detail below.

As shown in Figs. 4 (A) to 5 (C), in cylinder type gas generator 1A according to the present embodiment, a plurality of protruding portions 24 are provided at the inner circumferential surface of a portion of second barrel portion 23 of second holder 20B compressed radially inward by pressure contact by first swaging portion 11, which is a portion facing the outer circumferential surface of ignition portion 42. The plurality of protruding portions 24 are located as a row of dots along the circumferential direction of second barrel portion 23 when viewed along the axial direction of second holder 20B (that is, the axial direction of housing main body 10 in a state after assembly) and protrude toward ignition portion 42.

As shown in Figs. 2 and 7, an inner diameter of second holder 20B (that is, a diameter of second accommodation portion 23a) is slightly larger than a diameter of ignition portion 42, and an amount of protrusion of the plurality of protruding portions 24 is adjusted such that tip ends thereof are in pressure contact with the outer circumferential surface of ignition portion 42 with relatively weak force while ignition portion 42 is located in second barrel portion 23 of second holder 20B.

Therefore, in a state at the time of and after press-fitting of ignition portion 42 into second barrel portion 23, only the plurality of protruding portions 24 abut on the outer circumferential surface of ignition portion 42, and in a portion other than portions where protruding portions 24 are provided, a gap portion (a portion shown with a reference G in Figs. 7, 8 (A), and 8 (B) that show the state after press-fitting) is provided between the outer circumferential surface of ignition portion 42 and the inner circumferential surface of second barrel portion 23.

Therefore, according to such a configuration, in the state at the time of and after press-fitting of ignition portion 42 into second barrel portion 23, in a region where ignition portion 42 and second barrel portion 23 are opposed to each other, they are mostly spaced apart from each other by gap portion G (that is, not in direct contact), and hence only the tip ends of the plurality of protruding portions 24 are in pressure contact with ignition portion 42. Therefore, while ignition portion 42 is press-fitted into second barrel portion 23, deformation of ignition portion 42 caused thereby can be suppressed to minimum.

Additionally, as shown in particular in Figs. 7, 8 (A), and 8 (B), also in fixing by swaging of the igniter assembly to housing main body 10, only the tip ends of the plurality of protruding portions 24 are in pressure contact with ignition portion 42 with relatively weak force. Therefore, most of compressive force applied to second barrel portion 23 as a result of decrease in diameter of housing main body 10 does not propagate to ignition portion 42 owing to provision of gap portion G, and propagates to ignition portion 42 only in a portion of abutment to the plurality of protruding portions 24. Therefore, deformation of ignition portion 42 can be suppressed also in fixing by swaging of the igniter assembly to housing main body 10.

The plurality of protruding portions 24 are preferably arranged such that an axial line of ignition portion 42 does not lie between them in a direction orthogonal to the axial line. According to such a configuration, as the plurality of protruding portions 24 are in pressure contact with ignition portion 42, directions of force applied to ignition portion 42 intersect with each other (in other words, superimposition of these forces in directions reverse to each other on the same straight line can be avoided), and deformation of ignition portion 42 can more reliably be suppressed.

The plurality of protruding portions 24 are preferably evenly provided along the circumferential direction of second barrel portion 23. According to such a configuration, force applied to ignition portion 42 can be distributed so that deformation of ignition portion 42 can more reliably be suppressed.

Based on these points of view, an odd number of protruding portions 24 are most preferably provided evenly along the circumferential direction of second barrel portion 23, and in the present embodiment, three protruding portions 24 are evenly provided along the circumferential direction of second barrel portion 23.

Additionally, as shown in Figs. 2 and 4 (A) to 8 (B), in cylinder type gas generator 1A according to the present embodiment, a groove portion 25 is provided around second barrel portion 23 at a position radially outside the portion of second barrel portion 23 of second holder 20B where the plurality of protruding portions 24 are provided. Groove portion 25 is provided at an axial end surface of second barrel portion 23 on the side of first holder 20A.

According to such a configuration, rigidity of the portion of second barrel portion 23 where the plurality of protruding portions 24 are provided can be lowered to a considerable extent. Therefore, in the state at the time of and after press-fitting of ignition portion 42 into second barrel portion 23, force applied to ignition portion 42 by the plurality of protruding portions 24 can be reduced. Therefore, while ignition portion 42 is press-fitted into second barrel portion 23, deformation of ignition portion 42 can more reliably be suppressed.

According to such a configuration, also in fixing by swaging of the igniter assembly to housing main body 10, compressive force applied to second barrel portion 23 as a result of decrease in diameter of housing main body 10 is effectively absorbed by second barrel portion 23 by provision of groove portion 25. Therefore, also in fixing by swaging of the igniter assembly to housing main body 10, deformation of ignition portion 42 can more reliably be suppressed.

As described above, with cylinder type gas generator 1A according to the present embodiment, while deformation of ignition portion 42 is suppressed, ignition portion 42 can be press-fitted into second barrel portion 23 to securely fix second holder 20B to first holder 20A. In addition, housing main body 10 can be provided with first swaging portion 11 and second swaging portion 12 to securely fix the igniter assembly including first holder 20A, second holder 20B, and third holder 20C as well as igniter 40 and the like to housing main body 10.

Therefore, by adopting the configuration, holder assembly 20 including second holder 20B that performs the function as the directivity providing member or further the igniter assembly including that holder assembly 20 can immovably be fixed to the housing in a stable manner. Therefore, since position displacement of second holder 20B as the directivity providing member inside housing main body 10 can be suppressed, the individual difference in distance between igniter 40 and gas generating agent 60 is less likely and the cylinder type gas generator with which desired gas output can be obtained in a stable manner can be provided.

By adopting the configuration, with a relatively simplified configuration, cylinder type gas generator 1A can be equipped with second holder 20B that performs the function as the directivity providing member. In addition, the second holder can be assembled through a relatively easy assembly work such as press-fitting or swaging, and hence increase in manufacturing cost can also be suppressed.

Therefore, with cylinder type gas generator 1A according to the present embodiment, a cylinder type gas generator with which desired gas output can be obtained in a stable manner while increase in manufacturing cost is suppressed can be obtained.

Additionally, in cylinder type gas generator 1A according to the present embodiment, lid portion 26 is provided in second holder 20B as described above, so that the individual difference in distance between igniter 40 and gas generating agent 60 is less likely. Therefore, also in this regard, the cylinder type gas generator with which desired gas output can be obtained in a stable manner can be obtained.

In cylinder type gas generator 1A according to the present embodiment, by adopting the above configuration, unlike a portion of housing main body 10 that defines combustion chamber S1, a portion of housing main body 10 where first swaging portion 11 is provided is in a curved shape in the axial direction of housing main body 10. Therefore, the portion of housing main body 10 where first swaging portion 11 is provided is lower in strength than the portion of housing main body 10 that defines combustion chamber S1.

In cylinder type gas generator 1A according to the present embodiment, however, the inner circumferential surface of first swaging portion 11 is substantially covered with second barrel portion 23 of second holder 20B. Therefore, at the time of activation of cylinder type gas generator 1A, second barrel portion 23 of second holder 20B protects first swaging portion 11. Pressure withstanding performance of cylinder type gas generator 1A as a whole is thus also improved.

### (Second Embodiment)

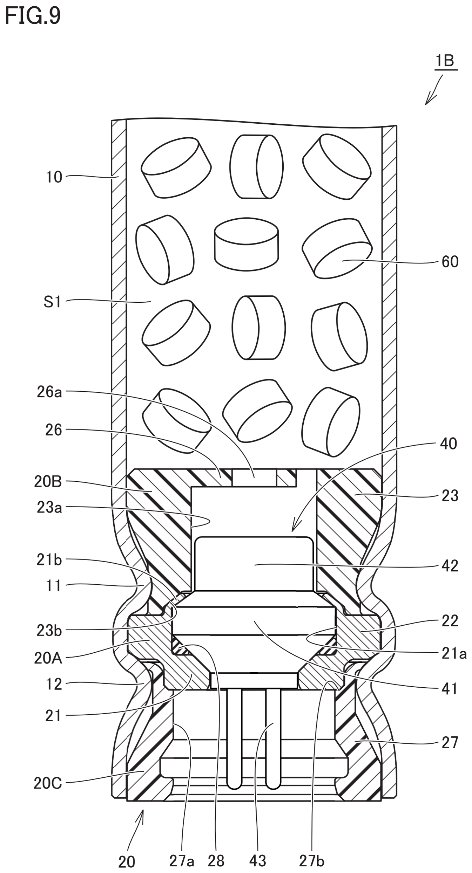

Fig. 9 is an enlarged cross-sectional view of the vicinity of an igniter of a cylinder type gas generator according to a second embodiment. A cylinder type gas generator 1B according to the present embodiment will be described below with reference to Fig. 9.

As shown in Fig. 9, cylinder type gas generator 1B according to the present embodiment is different from cylinder type gas generator 1A according to the first embodiment described above in configuration only in that ignition portion 42 is not press-fitted into second barrel portion 23 of second holder 20B, but is otherwise similar in configuration to cylinder type gas generator 1A described above.

Therefore, according to such a configuration as well, all of effects described in the first embodiment above, other than the effect obtained by press-fitting ignition portion 42 into second barrel portion 23 of second holder 20B, are obtained. Therefore, the cylinder type gas generator with which desired gas output can be obtained in a stable manner while increase in manufacturing cost is suppressed can be obtained.

### (Summary of First and Second Embodiments)

Characteristic features of the gas generators disclosed in the first and second embodiments described above are summarized as below.

### [Additional Aspect 1]

A gas generator includes
a cylindrical housing main body made of metal, the housing main body containing a combustion chamber where a gas generating agent is accommodated;
a holder assembly inserted in an opening end in an axial direction of the housing main body, the holder assembly including a hollow portion extending along a direction in parallel to the axial direction of the housing main body; and
an igniter including an ignition portion where an ignition agent is loaded, a terminal pin connected to the ignition portion, and a base where the terminal pin is inserted, the base supporting both of the ignition portion and the terminal pin, at least a part of the igniter being arranged inside the hollow portion while the ignition portion is located on a side of the combustion chamber and the terminal pin is located opposite to the side of the combustion chamber, and in the gas generator,
the holder assembly includes
   a first holder made of metal, the first holder holding the igniter by receiving the base, and
   a second holder made of resin, the second holder being located on the side of the combustion chamber when viewed from the first holder, the ignition portion being accommodated in the second holder,
the first holder includes
   a first barrel portion in a cylindrical shape that defines the hollow portion, and
   an annular projection that projects from the first barrel portion along a radial direction of the housing main body,
the second holder includes a second barrel portion in a cylindrical shape that defines the hollow portion,
the housing main body includes
   a first swaging portion decreased in diameter radially inward, and
   a second swaging portion decreased in diameter radially inward, the second swaging portion being located on a side of the opening end when viewed from the first swaging portion,
the first holder is fixed to the housing main body as the annular projection is sandwiched between the first swaging portion and the second swaging portion in the axial direction of the housing main body,
the first swaging portion is covered with the second barrel portion and in pressure contact with at least a part of an outer circumferential surface of the second barrel portion,
the second holder further includes a lid portion that spaces the gas generating agent apart from the ignition portion by closing at least a part of the hollow portion located opposite to the base portion when viewed from the ignition portion, and
the lid portion is arranged at a distance from the ignition portion along the axial direction of the housing main body.

### [Additional Aspect 2]

In the gas generator described in Additional Aspect 1,
a plurality of openings are provided in the lid portion, and
a maximum outer geometrical dimension of each of the plurality of openings when viewed along the axial direction of the housing main body is smaller than a minimum outer geometrical dimension of the gas generating agent.

### [Additional Aspect 3]

In the gas generator described in Additional Aspect 1 or 2,
the lid portion is provided at an axial end of the second barrel portion located opposite to an axial end of the second barrel portion on a side of the first holder.

### [Additional Aspect 4]

In the gas generator described in any one of Additional Aspects 1 to 3,
an axial end of the second holder located on a side of the first holder is fixed to the first holder by being fitted to the first holder.

### [Additional Aspect 5]

In the gas generator described in any one of Additional Aspects 1 to 4,
the holder assembly further includes a third holder made of resin, the third holder being located opposite to the side of the combustion chamber when viewed from the first holder, a connector to be connected to the terminal pin being receivable in the third holder,
the third holder includes a third barrel portion in a cylindrical shape that defines the hollow portion, and
the second swaging portion is in pressure contact with at least a part of an outer circumferential surface of the third barrel portion.

### [Additional Aspect 6]

In the gas generator described in Additional Aspect 5,
an axial end of the third holder located on a side of the first holder is fixed to the first holder by being fitted to the first holder.

### (Other Forms etc.)

In the first and second embodiments of the present invention described above, an example in which the holder assembly is composed of the first holder made of metal, the first holder mainly performing the function to hold the igniter, the second holder made of resin, the second holder mainly performing the function as the directivity providing member, and the third holder made of resin, the third holder mainly implementing a female connector portion, is illustrated and described. A single member, however, may serve as both of the first holder and the third holder. In that case, the single member should only be made of metal, perform the function to hold the igniter, and be provided with the female connector portion.

In the first and second embodiments of the present invention described above, an example in which a plurality of openings are provided in the lid portion of the second holder is illustrated and described. A single opening, however, may be provided in the lid portion. An opening does not necessarily have to be provided in the lid portion in an example where the lid portion itself is formed to have a small thickness or to be weak or the lid portion is provided with a score that opens as a result of burning of the ignition agent at the time of activation of the cylinder type gas generator.

The shape, the size, the number, the position of arrangement, or the like of the members disclosed in the first and second embodiments of the present invention described above can naturally variously be modified within the scope not departing from the gist of the present invention in light of the same.

In the first and second embodiments of the present invention described above, an example in which the present invention is applied to a cylinder type gas generator incorporated in a side air bag apparatus is illustrated and described. Applications of the present invention, however, are not limited thereto and the present invention can be applied also to a cylinder type gas generator incorporated in a curtain air bag apparatus, a knee air bag apparatus, or a seat cushion air bag apparatus or what is called a T-shaped gas generator having an elongated outer geometry similarly to the cylinder type gas generator.

The embodiments disclosed herein are thus illustrative and non-restrictive in every respect. The technical scope of the present invention is delimited by the terms of the claims, and includes any modifications within the scope and meaning equivalent to the terms of the claims.

### REFERENCE SIGNS LIST

1A, 1B cylinder type gas generator; 10 housing main body; 11 first swaging portion; 12 second swaging portion; 13 third swaging portion; 14 gas discharge opening; 20 holder assembly; 20A first holder; 20B second holder; 20C third holder; 21 first barrel portion; 21a first accommodation portion; 21b swaging portion; 22 annular projection; 23 second barrel portion; 23a second accommodation portion; 23b first annular stepped portion; 24 protruding portion; 25 groove portion; 26 lid portion; 26a opening; 27 third barrel portion; 27a third accommodation portion; 27b second annular stepped portion; 28 sealing member; 30 closing member; 40 igniter; 41 base; 42 ignition portion; 43 terminal pin; 50 partition member; 51 separation wall portion; 51a score; 52 annular wall portion; 60 gas generating agent; 61 autoignition agent; 70 coil spring; 71 spring portion; 72 pressing portion; 80 filter; 81 cavity portion; 90 welded portion; G gap portion; S1 combustion chamber; S2 filter chamber.

## Claims

1. A gas generator comprising:
a cylindrical housing main body made of metal, the housing main body containing a combustion chamber where a gas generating agent is accommodated;
a holder assembly inserted in an opening end in an axial direction of the housing main body, the holder assembly including a hollow portion extending along a direction in parallel to the axial direction of the housing main body; and
an igniter including an ignition portion where an ignition agent is loaded, a terminal pin connected to the ignition portion, and a base where the terminal pin is inserted, the base supporting both of the ignition portion and the terminal pin, at least a part of the igniter being arranged inside the hollow portion while the ignition portion is located on a side of the combustion chamber and the terminal pin is located opposite to the side of the combustion chamber, wherein
the holder assembly includes
a first holder made of metal, the first holder holding the igniter by receiving the base, and
a second holder made of resin, the second holder being located on the side of the combustion chamber when viewed from the first holder, the ignition portion being accommodated in the second holder,
the first holder includes
a first barrel portion in a cylindrical shape that defines the hollow portion, and
an annular projection that projects from the first barrel portion along a radial direction of the housing main body,
the second holder includes a second barrel portion in a cylindrical shape that defines the hollow portion,
the housing main body includes
a first swaging portion decreased in diameter radially inward, and
a second swaging portion decreased in diameter radially inward, the second swaging portion being located on a side of the opening end when viewed from the first swaging portion,
the first holder is fixed to the housing main body as the annular projection is sandwiched between the first swaging portion and the second swaging portion in the axial direction of the housing main body,
the first swaging portion is covered with the second barrel portion and in pressure contact with at least a part of an outer circumferential surface of the second barrel portion,
the second holder further includes a lid portion that spaces the gas generating agent apart from the ignition portion by closing at least a part of the hollow portion located opposite to the base portion when viewed from the ignition portion, and
the lid portion is arranged at a distance from the ignition portion along the axial direction of the housing main body.

2. The gas generator according to claim 1, wherein
a plurality of openings are provided in the lid portion, and
a maximum outer geometrical dimension of each of the plurality of openings when viewed along the axial direction of the housing main body is smaller than a minimum outer geometrical dimension of the gas generating agent.

3. The gas generator according to claim 1, wherein
the lid portion is provided at an axial end of the second barrel portion located opposite to an axial end of the second barrel portion on a side of the first holder.

4. The gas generator according to claim 1, wherein
an axial end of the second holder located on a side of the first holder is fixed to the first holder by being fitted to the first holder.

5. The gas generator according to claim 1, wherein
the holder assembly further includes a third holder made of resin, the third holder being located opposite to the side of the combustion chamber when viewed from the first holder, a connector to be connected to the terminal pin being receivable in the third holder,
the third holder includes a third barrel portion in a cylindrical shape that defines the hollow portion, and
the second swaging portion is in pressure contact with at least a part of an outer circumferential surface of the third barrel portion.

6. The gas generator according to claim 5, wherein
an axial end of the third holder located on a side of the first holder is fixed to the first holder by being fitted to the first holder.
